# EUROPÄISCHE PATENTANMELDUNG

(11) **EP 1 806 545 A2**
(43) Veröffentlichungstag der Anmeldung: **11.07.2007**
(21) Anmeldenummer: 06126060.0
(22) Anmeldetag: 13.12.2006
(51) Int. Cl.: F24J 2/24, F24J 2/40, F24J 2/42, F24J 2/46

(54) **Solarkollektor zum Erwärmen von Wasser für einen Swimmingpool und dafür geeigneter Bausatz**

(30) Priorität: 19.12.2005 DE 102005061008
(71) Anmelder: Roos Freizeitanlagen GmbH, 63674 Altenstadt (DE)
(72) Erfinder: Roos, Franz, 63674 Altenstadt (DE)
(74) Vertreter: Staudt, Armin Walter

(57) **Zusammenfassung**

Es ist ein Solarkollektor zum Erwärmen von Wasser für einen Swimmingpool bekannt, mit einer mattenförmigen Röhrenanordnung, die von einer Vielzahl parallel zueinander verlaufender Röhren gebildet wird, die entweder einem Zulaufabschnitt oder einem Rücklaufabschnitt für das zu erwärmende Wasser zugeordnet sind, wobei die dem Zulaufabschnitt zugeordneten Röhren mit einer Verteiler-Zuleitung verbunden sind, und die dem Rücklaufabschnitt zugeordneten Röhren in einer gemeinsamen Sammel-Ableitung münden, die zu einer Auslauföffnung führt. Um einen derartigen Solarkollektor im Hinblick auf Kosten zu optimieren, wird erfindungsgemäß vorgeschlagen, dass die Verteiler-Zuleitung und die Sammel-Ableitung eine zur Auslauföffnung führende Kurzschlussleitung bilden, welche mittels eines Absperrelements verschließbar ist. Ein zur Herstellung des erfindungsgemäßen Solarkollektors geeigneter, Bausatz umfasst eine Verteiler-Zuleitung und eine Sammel-Ableitung, wobei zur Ausbildung einer Kurzschlussleitung zwischen Verteiler-Zuleitung und Sammel-Ableitung eine Verbindungsvorrichtung vorgesehen, und zum Verschließen der Kurzschlussleitung ein bewegliches Absperrelement enthalten ist.

## Beschreibung

Die vorliegende Erfindung betrifft einen Solarkollektor zum Erwärmen von Wasser für einen Swimmingpool, umfassend eine mattenförmige Röhrenanordnung, die von einer Vielzahl parallel zueinander verlaufender Röhren gebildet wird, die entweder einem Zulaufabschnitt oder einem Rücklaufabschnitt für das zu erwärmende Wasser zugeordnet sind, wobei die dem Zulaufabschnitt zugeordneten Röhren mit einer gemeinsamen, an einer Kopfseite der Röhrenanordnung verlaufenden Verteiler-Zuleitung verbunden sind, und die dem Rücklaufabschnitt zugeordneten Röhren an derselben Kopfseite der Röhrenanordnung in einer gemeinsamen Sammel-Ableitung münden, die zu einer Auslauföffnung führt.

Weiterhin geht es in der Erfindung um einen Bausatz zur Herstellung eines Solarkollektors, der einen Rohrstrang aus Kunststoff zur Herstellung einer mattenförmigen Röhrenanordnung, eine Verteiler-Zuleitung und eine Sammel-Ableitung umfasst.

Derartige Flachkollektoren werden zum Erwärmen des Badewassers fest installierter oder frei aufstellbarer Schwimmbecken oder Kinderpools im Innen-oder Außenbereich eingesetzt. Die bekannten Kollektoren weisen eine vom zu erwärmenden Badewasser durchströmte Absorber-Röhrenanordnung auf, mittels dem die von der Sonne eingestrahlte Energie kontinuierlich auf das in der Röhrenanordnung zirkulierende Wasser übertragen und dem Swimmingpool zugeführt wird.

Zum Transport des solarthermisch erwärmten Wassers vom Kollektor zum Swimmingpool dienen elektrisch betriebene Umwälzpumpen. Zur Erhaltung der Wasserqualität werden Filter eingesetzt, mittels denen das Wasser laufend aufbereitet und organische und anorganische Schmutzteilchen mechanisch entfernt werden.

In der Regel ist die Röhrenanordnung mattenförmig aus zahlreichen parallel zueinander verlaufenden Metall- oder Kunststoffröhren ausgebildet, wobei die einzelnen Röhren in ein Hüllmaterial eingebettet oder über Querstege miteinander verbunden sind. Die parallel zueinander verlaufenden Röhren münden beiderseits in gemeinsame Verteilerleitungen. Dabei kann man je nach Verlauf der Wasserströmung in der Röhrenanordnung zwischen "Diagonal-Absorbern" und "Umkehr-Absorbern" unterscheiden.

Bei Diagonal-Absorbern fließt das zu erwärmende Wasser durch alle Röhren der Absorber-Matte in derselben Strömungsrichtung. Hierzu erstreckt sich eine Verteiler-Zuleitung über die gesamte Einlassseite der Absorber-Matte. Das zu erwärmende Wasser tritt über diese Zuleitung in die Röhrenanordnung ein, verteilt sich annähernd gleichmäßig in den Röhren und tritt auf der gegenüberliegenden Auslassseite über eine gemeinsame Verteiler-Ableitung wieder aus. Zu- und Ablauf sind an zwei sich diagonal gegenüberliegenden Ecken der Absorber-Matte vorgesehen. Ein Solarkollektor dieser Art ist zum Beispiel in der DE 202 15 126 U1 beschrieben.

Beim Umkehr-Absorber ist die Aborber-Matte in mindestens zwei (nicht zwingend gleich große) Abschnitte, nämlich einen Zu- und einen Rücklaufabschnitt, aufgeteilt. Das zu erwärmende Wasser tritt über eine Verteiler-Zuleitung, die sich nur entlang des Zulaufabschnitts der Absorber-Matte erstreckt, in die dem Zulaufabschnitt zugeordneten Röhren ein, durchströmt diese in der einen Strömungsrichtung, und wird über eine Verteilerleitung an der gegenüberliegenden Stirnseite in die dem Rücklaufabschnitt zugeordneten Röhren umgeleitet, durch die das Wasser in umgekehrter Strömungsrichtung wieder zur Absorber-Kopfseite zurückströmt und über eine Sammel-Ableitung austritt. Ein- und Auslauf befinden sich somit auf derselben Kopfseite der Matte.

Bei dieser Ausführungsform ersetzen die wasserrückführenden Röhren des Rücklaufabschnitts ein ansonsten notwendiges separates Rücklaufrohr, so dass sich im Vergleich zum Diagonal-Absorber ein geringerer Material- und Montageaufwand ergibt. Auf dem Prinzip des Umkehr-Absorbers beruhende Solarkollektoren werden daher vor allem für Anwendungen eingesetzt, bei denen es auf besonders niedrige Kosten ankommt.

Handelsübliche Bausätze zum Selbstbau derartiger Solarkollektoren enthalten neben dem erforderlichen Halbzeug für die Anfertigung der Röhrenanordnung und der Verteiler- und Sammelleitungen in der Regel auch eine Umwälzpumpe und die erforderlichen Filter.

Der vorliegenden Erfindung liegt die Aufgabe zugrunde, einen Solarkollektor im Hinblick auf eine weitere Kostenersparnis zu optimieren. Weiterhin liegt der Erfindung die Aufgabe zugrunde, einen zur Herstellung des erfindungsgemäßen Solarkollektors geeigneten, preiswerten Bausatz bereitzustellen.

Hinsichtlich des Solarkollektors wird diese Aufgabe ausgehend von einem Solarkollektor der eingangs genannten Gattung erfindungsgemäß dadurch gelöst, dass die Verteiler-Zuleitung und die Sammel-Ableitung eine zur Auslauföffnung führende Kurzschlussleitung bilden, welche mittels eines Absperrelements verschließbar ist.

Bei der erfindungsgemäßen Weiterbildung des bekannten Solarkollektors ist eine direkte fluidische Verbindung zwischen der Verteiler-Zuleitung und der Sammel-Ableitung vorgesehen. Diese Verbindung bildet eine zur Auslauföffnung führende Kurzschlussleitung, die mittels eines bewegbaren Absperrelements bei Bedarf verschlossen und wieder geöffnet werden kann.

Bei geschlossener Kurzschlussleitung befindet sich das Umwälzsystem des Solarkollektors im normalen Arbeitsmodus. Das zu erwärmende Wasser fließt von der Verteiler-Zuleitung durch die Röhrenanordnung zur Auslauföffnung und weiter zum Swimmingpool ab. Bei geöffneter Kurzschlussleitung gelangt der Wasserstrom unter Umgehung der Röhrenanordnung direkt von der Verteiler-Zuleitung über die Sammel-Ableitung zur Auslauföffnung und zum Swimmingpool. Diese Maßnahme hat den im Folgenden erläuterten Effekt:

Eine kontinuierliche oder zumindest zeitweise Umwälzung des Badewassers ist zum Entfernen von Verschmutzungen durch den Filter und somit zur Beibehaltung der Wasserqualität angebracht. Bei niedriger Umgebungstemperatur oder geringem Sonneneinfall kann der fortdauernde Umwälzbetrieb über die Röhrenanordnung des Solarkollektors jedoch zu einer Abkühlung des Badewassers beitragen, was in der Regel unerwünscht ist. Ebenso kann eine hohe Umgebungstemperatur oder eine starke Sonneneinstrahlung bei kontinuierlichem Umwälzbetrieb unter Einbezug der Röhrenanordnung zu einer übermäßigen Erwärmung des Badewassers führen.

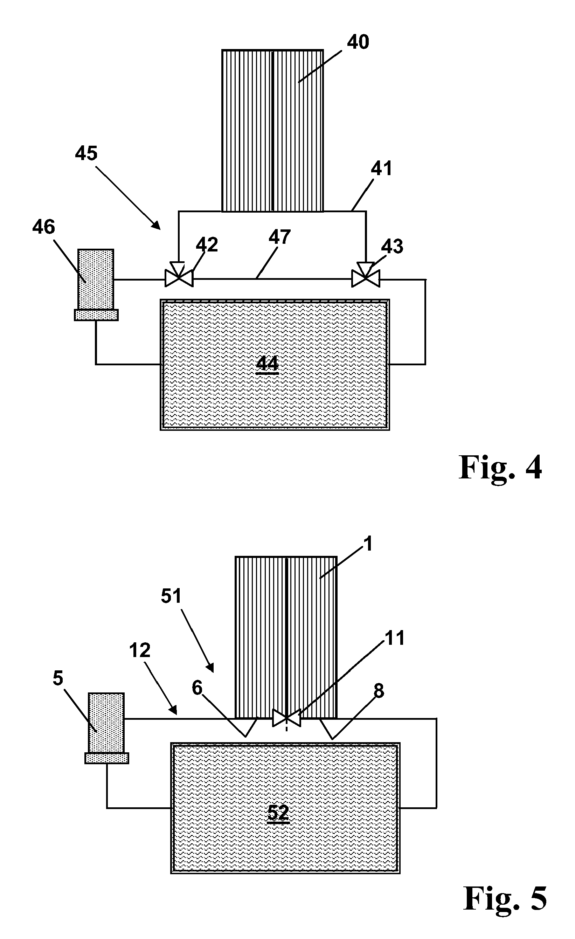

Zu diesem Zweck sind die Umwälzsysteme hochwertiger Solarkollektorsysteme zur Umgehung der Röhrenanordnung mit einer Bypass-Leitung ausgestattet. Eine im Stand der Technik übliche Ausgestaltung einer derartigen Bypass-Leitung ist in Figur 4 anhand eines Schaltkreises schematisch dargestellt und wird weiter unten noch näher erläutert.

Diese Maßnahme erfordert jedoch einen zusätzlichen Aufwand an Leitungsmaterial, Armaturen, Dichtungen und Montage. Im Schaltkreis nach Figur 4 befindet sich die Röhrenanordnung 40 zum Beispiel in einer aus Schläuchen gebildeten separaten Bypass-Leitung 41. Zwecks Führung des zu erwärmenden Wassers durch die Röhrenanordnung 40 über die Bypass-Leitung 41 sind zwei Dreiwege-Armaturen 42, 43 (zum Beispiel Hähne oder Ventile) erforderlich, die mittels geeigneter Schlauchverbindungen wasserdicht an jeweils drei Schlauchenden zu montieren sind, so dass nicht weniger als sechs wasserdichte Verbindungen erforderlich sind. Dabei ist zu beachten, dass die elastische Verformbarkeit der Schläuche die Herstellung einer dichten Verbindung zwischen Armatur und Schlauch erschwert.

Gemäß der vorliegenden Erfindung wird eine derartige separate Bypass-Leitung vermieden und durch eine vergleichsweise einfach und kostengünstig zu realisierende Verbindung zwischen der sowieso vorhandenen Verteiler-Zuleitung zur ebenfalls vorhandenen Sammel-Ableitung ersetzt. Diese Verbindung, die hier und im Folgenden als "Kurzschlussleitung" bezeichnet wird, kann mittels eines Absperrelements verschlossen werden und geöffnet werden, wobei sie im geöffneten Zustand den Zweck eines Bypasses für die Röhrenanordnung erfüllt.

Bei bekannten Solarkollektoren des Typs "Umkehr-Absorber" sind die Verteiler-Zuleitung und die Sammel-Ableitung einseitig geschlossen, so dass das zu erwärmende Wasser in die Röhrenanordnung abfließt. Sie können dabei - zum Beispiel voneinander durch eine Trennwand separiert - in einem gemeinsamen Rohrstück ausgebildet sein. Bei einer derartigen Ausgestaltung von Verteiler-Zuleitung und Sammel-Ableitung genügen zur Ausbildung der Kurzschlussleitung im Sinne der vorliegenden Erfindung einfache Maßnahmen, nämlich die Herstellung einer fluidisch dichten Verbindung zwischen diesen Leitungen (Verteiler-Zuleitung und Sammel-Ableitung) und die Möglichkeit, diese Leitung mittels eines Absperrelementes verschließen und bei Bedarf öffnen zu können..

Das Absperrelement greift im Bereich zwischen Verteiler-Zuleitung und Sammel-Ableitung an, beispielsweise an einer etwaigen separaten Verbindungsleitung zwischen Verteiler-Zuleitung und Sammel-Ableitung. Eine vollständig oder abschnittsweise elastisch verformbare Verbindungsleitung kann beispielsweise durch Zusammenpressen mittels eines Absperrelements in Form einer Klemme oder dergleichen verschlossen werden. Bevorzugt ist jedoch eine Ausführungsform des Solarkollektors, bei der das Absperrelement ein in die Kurzschlussleitung eingesetztes Bauteil ist.

Das Absperrelement ist hierbei einerseits unmittelbar oder mittelbar mit der Verteiler-Zuleitung und andererseits unmittelbar oder mittelbar mit der Sammel-Ableitung verbunden. Als geeignete Bauformen seien Ventile, Hähne oder Schieber genannt. Bei Verteiler-Zuleitung und Sammel-Ableitung in biegesteifer Ausführung gestaltet sich die Herstellung einer dichten Verbindung zum Absperrelement besonders einfach. Diese Ausführungsform zeichnet sich daher durch hohe Betriebssicherheit und besonders geringen Montageaufwand aus.

Besonders bewährt hat sich ein als Schieber ausgebildetes Absperrelement. Derartige Armaturen stellen für Anwendungen im Niederdruckbereich - wie im vorliegenden Fall - besonders einfache und kostengünstige Maßnahmen dar und sind im Handel in geeigneten Ausführungen erhältlich.

In einer alternativen und gleichermaßen bevorzugten Ausgestaltung des erfindungsgemäßen Solarkollektors ist das Absperrelement als Absperrhahn ausgebildet.

Ein Vorteil dieser Armatur - sei es als Kugelhahn oder als Kükenhahn - besteht darin, dass von Außen unmittelbar erkennbar ist, ob sich die Kurzschlussleitung in Offenstellung oder in Geschlossenstellung befindet.

Durch Betätigen des Schiebers bzw. des Absperrhahns wird die Kurzschlussleitung geschlossen oder geöffnet. Dieses kann elektrisch oder manuell erfolgen, wobei einem handbetätigten Absperrelement aus Kostengründen der Vorzug gegeben wird.

Weiterhin hat es sich als vorteilhaft erwiesen, wenn die Verteiler-Zuleitung und die Sammel-Ableitung mittels einer Verbindungsvorrichtung miteinander verbunden sind, welche gleichzeitig zur Aufnahme des Absperrelements dient..

Die Verbindungsvorrichtung dient einerseits zur flüssigkeitsdichten Verbindung zu Verteiler-Zuleitung und Sammel-Ableitung und andererseits zur Aufnahme und Fixierung des Absperrelementes.

Im Hinblick hierauf hat sich eine Ausführungsform des erfindungsgemäßen Solarkollektors bewährt, bei der die Verbindungsvorrichtung einen mit der Verteiler-Zuleitung verbundenen Flansch und einen mit der Sammel-Ableitung verbundenen Flansch umfasst, wobei das Absperrelement zwischen den sich gegenüberliegenden Flanschen fixiert ist.

Das Absperrelement liegt hierbei als separate, mittels Flanschverbindung in die Kurzschlussleitung einzufügende Armatur vor. Derartige Flanschverbindungen sind auch von Laien leicht herzustellen und abzudichten.

Bei einer besonders bevorzugten Ausgestaltung bestehen die Verteiler-Zuleitung, die Sammel-Ableitung und die Verbindungsvorrichtung aus demselben Kunststoff.

Die für die Herstellung der Verteiler-Zuleitung, der Sammel-Ableitung und der Verbindungsvorrichtung geeigneten Kunststoffe zeichnen sich durch eine hohe Beständigkeit aus, insbesondere gegenüber UV-Strahlung und gegenüber dem zu erwärmenden Wasser, das korrosiv wirkende Chemikalien enthalten kann. Fügeverbindungen der genannten Bauteile miteinander zeigen wegen des jeweils gleichen thermischen Ausdehnungskoeffizienten geringe Dichtungs- und Alterungsprobleme.

Um eine größere Kollektorfläche zu erhalten, können mehrere Röhrenanordnungen miteinander verbunden werden.

Bei zusammengeschalteten Absorbern des Typs "Umkehr-Absorber" ist die Sammel-Ableitung des vorderen Absorbers in der Regel mit der Verteiler-Zuleitung der hinteren Absorbers verbunden. Zu öffnende und verschließbare Absperrelemente sind dabei vorzugsweise zwischen der Verteiler-Zuleitung und der Sammel-Ableitung aller verbundenen Absorber vorgesehen. Für den Fall, dass die mattenförmige Röhrenanordnung zwei miteinander verbundene Röhrenanordnungen vom Typ "Diagonal-Absorber" umfasst, hat es sich bewährt, wenn der eine Absorber die Verteiler-Zuleitung und die dem Zulaufabschnitt zugeordneten Röhren, und der andere Absorber die Sammel-Ableitung und die dem Rücklaufabschnitt zugeordneten Röhren bildet.

In diesem Fall ist der Auslauf des einen Diagonal-Absorbers mit dem Zulauf des anderen verbunden, so dass der eine Diagonal-Absorber dem Zulaufabschnitt für das zu erwärmende Wasser zuzuordnen ist, und der andere Diagonal-Absorber dem Rücklaufabschnitt. Die Kurzschlussleitung ist hierbei lediglich zwischen der Verteiler-Zuleitung des vorderen Diagonal-Absorbers und der Sammel-Ableitung des nachgeschalteten Diagonal-Absorbers erforderlich.

Bei einer besonders bevorzugten Ausführungsform des erfindungsgemäßen Solarkollektors ist das Absperrelement mit einer Temperaturregeleinrichtung verbunden.

Das Absperrelement ist hierbei elektrisch oder mechanisch in Abhängigkeit von einer Temperatur auf einen Öffnungswert zwischen Offenstellung und Geschlossenstellung variabel einstellbar, wobei die Einstellung des Öffnungswertes anhand einer Temperaturregelung oder -steuerung erfolgt. Bei der maßgeblichen Temperatur handelt es sich beispielsweise um die Wassertemperatur beim Einlauf in den Solarkollektor, beim Auslauf aus dem Solarkollektor, um die Umgebungstemperatur oder um eine Mischtemperatur davon. Mittels der Temperatureinstellung kann zum Beispiel die maximale oder minimale Wassertemperatur beim Auslauf vorgegeben werden, oberhalb der beziehungsweise unterhalb der die Kurzschlussleitung geöffnet und der Absorber nicht weiter durchströmt werden soll.

Diese Temperaturregelung oder -steuerung kann mittels elektrisch regelbarer Absperrelemente erfolgen, wie etwa elektrischen Regelventilen. Besonders bewährt hat es sich jedoch, wenn die Temperaturregeleinrichtung einen auf das Absperrelement stromlos einwirkenden Ausdehnungskörper umfasst.

Durch den Einsatz eines derartigen Ausdehnungskörpers kann die Temperaturregelung oder -steuerung ohne Anschluss des Absperrelementes an eine Stromquelle erfolgen. Der Einsatz solcher Ausdehnungskörper ist zum Beispiel in Thermostaten oder bei Belüftungsvorrichtungen in Gewächshäusern oder Wintergärten üblich. Sie bestehen im Wesentlichen aus einer Substanz mit hohem thermischem Ausdehnungskoeffizienten, die als Feststoff oder als Gas, Flüssigkeit oder Gel in geeigneter Kapselung vorliegen kann.

Hinsichtlich des Bausatzes für den erfindungsgemäßen Solarkollektor wird die oben genannte Aufgabe ausgehend von einem Bausatz der eingangs genannten Gattung erfindungsgemäß dadurch gelöst, dass zur Ausbildung einer Kurzschlussleitung zwischen Verteiler-Zuleitung und Sammel-Ableitung eine Verbindungsvorrichtung vorgesehen ist, und dass zum Verschließen der Kurzschlussleitung ein bewegliches Absperrelement enthalten ist.

Außer den für die Herstellung eines Solarkollektors im Selbstbau üblichen Bauteilen, wie etwa einem Rohrstrang aus Kunststoff, aus dem zur Herstellung der mattenförmigen Röhrenanordnung erforderlichen Röhren abgelängt werden können, sowie den mit den Röhren zu verbindenden Sammelleitungen in Form der Verteiler-Zuleitung und der Sammel-Ableitung, und optional einer Umwälzpumpe und Filtern, umfasst der Bausatz gemäß vorliegender Erfindung eine Verbindungsvorrichtung zur Ausbildung einer Kurzschlussleitung zwischen Verteiler-Zuleitung und Sammel-Ableitung und ein bewegliches Absperrelement zum Verschließen und Öffnen der Kurzschlussleitung. Das Absperrelement ist somit zwischen einer Offenstellung und einer Geschlossenstellung bewegbar.

Damit ist im Selbstbau und besonders kostengünstig ein Solarkollektor herstellbar, der über einen variablen Bypass zur Röhrenanordnung verfügt, mit dem ansonsten - in Form einer separaten Bypass-Leitung - nur sehr viel teurere Solarkollektoren ausgestattet sind.

Hinsichtlich der vorteilhaften Ausgestaltungen dieses Bypasses und der dadurch erzielbaren Wirkungen wird auf die obigen Erläuterungen zum erfindungsgemäßen Solarkollektor Bezug genommen.

In einer besonders vorteilhaften Modifizierung des Bausatzes umfasst die Verbindungsvorrichtung einen mit der Verteiler-Zuleitung zu verbindenden Flansch und einen mit der Sammel-Ableitung zu verbindenden Flansch.

Das Absperrelement liegt hierbei als separate Armatur vor, die mittels der Flanschverbindung in die Kurzschlussleitung einzufügen ist. Die Flansche sind vorzugsweise mit seitlich eingeschlitzten Muffen verbunden, die über die jeweilig Leitung (Verteiler-Zuleitung bzw. Sammel-Ableitung) geschoben und mit diesen verklebt werden. Die seitlichen Schlitze stellen dabei Aussparungen für die jeweils benachbarte Röhre dar. Die Flansche und die Muffe bestehen vorzugsweise aus dem selben Werkstoff - in der Regel aus Kunststoff - wie die genannten Leitungen.

Nachfolgend wird die Erfindung anhand eines Ausführungsbeispiels und einer Zeichnung näher erläutert. Im Einzelnen zeigt in schematischer Darstellung:
- **Figur 1**: eine Ausführungsform eines erfindungsgemäßen Solarkollektors in zum Erwärmen des Badewassers eines Swimmingpools,
- **Figur 2**: eine vergrößerte Darstellung eines in Figur 1 gezeigten Absperrelements "A" zwischen Verteiler-Zuleitung und Sammel-Ableitung,
- **Figur 3**: eine alternative Ausführungsform eines Absperrelements "A" zwischen Verteiler-Zuleitung und Sammel-Ableitung in vergrößerter Darstellung,
- **Figur 4**: einen Schaltkreis für den Betrieb eines Solarkollektors in einer "Bypass-Leitung" nach dem Stand der Technik, und
- **Figur 5**: einen Schaltkreis für den Betrieb eines Solarkollektors in einer "Kurzschluss-Leitung" gemäß der Erfindung.

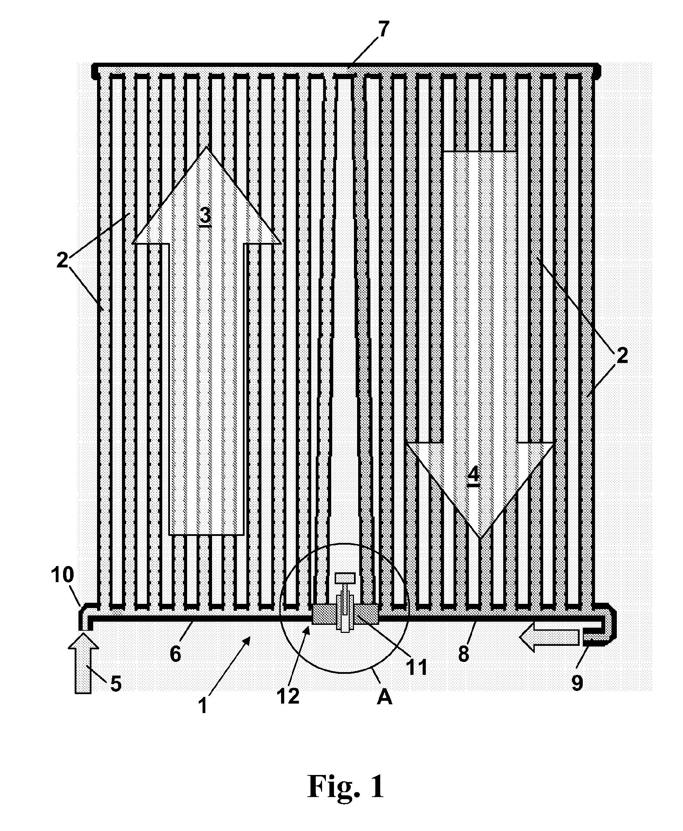

Der in **Figur 1** dargestellte Solarkollektor ist in Form eines Umkehr-Absorbers ausgeführt. Die Absorber-Matte 1 besteht aus einer Vielzahl parallel zueinander verlaufender Rippenrohre 2, welche zwei etwa gleich großen Mattenabschnitten zugeordnet sind, nämlich einem Zulaufabschnitt (Richtungspfeil 3) und einem Rücklaufabschnitt (Richtungspfeil 4). Die Rippenrohre 2 bestehen aus Polypropylen, das gegenüber UV-Strahlung beständig und gegenüber chlorhaltigem Wasser resistent ist.

Im normalen Betriebsmodus gelangt das zu erwärmende Wasser von der Umwälzpumpe, die durch den Pfeil 5 symbolisiert ist, über den Einlauf 10 in eine Verteiler-Zuleitung 6, die sich entlang des Zulaufabschnitts 3 der Absorber-Matte 1 erstreckt, und mit der die dem Zulaufabschnitt 3 zugeordneten Rippenrohre 2 verbunden sind. Beim Durchströmen der Rippenrohre 2 wird das Wasser erwärmt und gelangt über die Verteilerleitung 7 an der gegenüberliegenden Stirnseite der Absorber-Matte 1 in die dem Rücklaufabschnitt 4 zugeordneten Rippenrohre 2, durch die das Wasser unter weiterer Wärmeaufnahme in umgekehrter Strömungsrichtung zurückströmt, und über eine Sammel-Ableitung 8 zum Auslauf 9 gelangt, der mit dem (in der Figur nicht dargestellten) Swimmingpool verbunden ist.

Bei den bekannten Solarkollektoren dieser Art sind die Verteiler-Zuleitung 6 und die Sammel-Ableitung 8 stirnseitig geschlossen und insoweit voneinander getrennt. Im Unterschied dazu ist bei dem Solarkollektor gemäß vorliegender Erfindung zwischen der Verteiler-Zuleitung 6 und der Sammel-Ableitung 8 eine unmittelbare fluidische Verbindung vorgesehen, die als Kurzschlussleitung 12 für die Rippenrohre 2 der Absorber-Matte 1 dient. Die Kurzschlussleitung 12 ist mittels eines beweglichen Absperrelementes in Form eines Schiebers 11 verschließbar, wobei sich der Solarkollektor in Geschlossenstellung der Kurzschlussleitung 12, wie sie Figur 1 schematisch zeigt, in seinem bestimmungsgemäßen, normalen Betriebsmodus befindet.

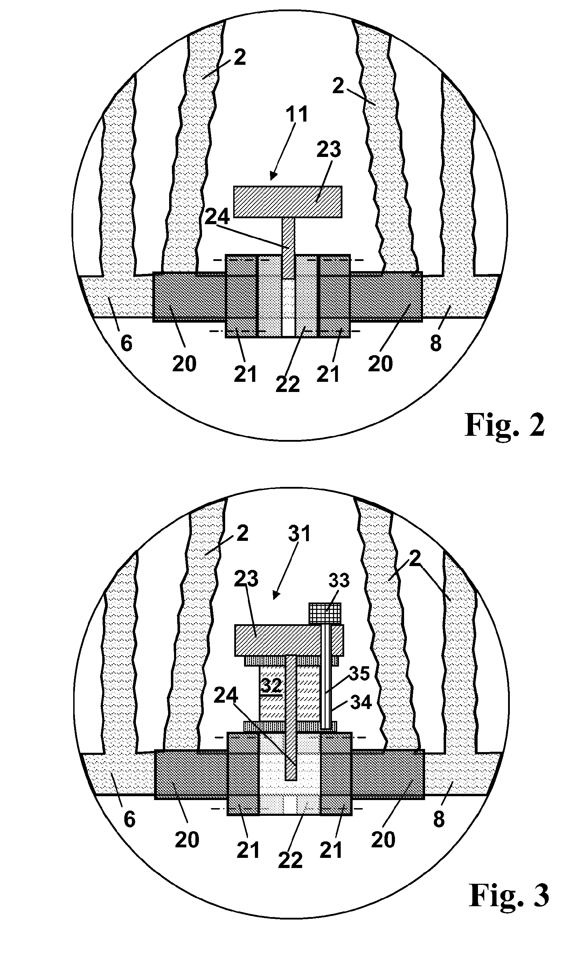

Bei einer Kurzschlussleitung 12 in Offenstellung (wie in Figur 2 gezeigt) wird das Wasser des Swimmingpools über Filter und Pumpe 5 unmittelbar über den Verteiler-Zuleitung 6 und die Sammel-Ableitung 8 umgewälzt, wobei die Rippenrohre 2 je nach Anordnung der Absorber-Matte dabei leerlaufen können. Dadurch wird eine kontinuierliche oder taktweise Umwälzung des Badewassers, und damit eine Reinigung durch den Filter, auch ohne die Erwärmungs- oder Abkühlungswirkung der Absorber-Matte, ermöglicht.

Wesentlich im Sinne einer Kostenersparnis ist, dass durch die Schaffung einer absperrbaren, fluidischen Verbindung zwischen Verteiler-Zuleitung 6 und Sammel-Ableitung 8 eine separate Bypass-Leitung, wie sie aus dem Stand der Technik für den gleichen Zweck bekannt ist, beim erfindungsgemäßen Solarkollektor nicht erforderlich ist, da die Schaffung der Kurzschlussleitung 12 lediglich der Realisierung einer verschließbaren fluidischen Verbindung zwischen den vorhandenen Leitungen 6 und 8 bedarf.

Anhand **Figur 2**, in der die Einzelheit "A" von Figur 1 - nämlich das Absperrelement 11 - vergrößert dargestellt ist, wird auch der erfindungsgemäße Bausatzes am Beispiel einer bevorzugten Ausführungsform näher erläutert.

Die zueinander weisenden Stirnseiten von Verteiler-Zuleitung 6 und Sammel-Ableitung 8 sind jeweils über eine Muffe 20 mit einem Flansch 21 verbunden. Muffe 21 und Flansch 21 sind miteinander verklebt und bestehen aus dem gleichen Kunststoff wie die Leitungen 6, 8, nämlich aus Acrylnitrilbutadienstyrol (ABS). Die Bauteile 6, 8, 20 und 21 sind Spritzgussteile und sie weisen eine Stärke auf, die eine gewisse Biegesteifigkeit gewährleistet und somit die Herstellung einer auf Dauer wasserdichten Verbindung erleichtert.. Die Muffen 20 sind über Verteiler-Zuleitung 6 bzw. Sammel-Ableitung 8 geschoben und mit diesen verklebt. An ihrem dem Flansch 21 gegenüberliegenden Ende weisen sie eine Aussparung für das jeweils benachbarte, anliegende Rippenrohr auf.

Zwischen den Flanschen 21 wird das Gehäuse 22 des Schiebers 11 gehalten. Der Schieber 11 umfasst eine Handhabe 23, die mit einem Schließkolben 24 zum Absperren des Wassersdurchflusses von der Verteiler-Zuleitung 6 zur Sammel-Ableitung 8 verbunden ist, und der bei Bedarf auch zur Begrenzung oder Regelung des Durchflusses eingesetzt werden kann. Bei geöffnetem Schließkolben 24, wie in Figur 2 gezeigt, fließt das Wasser unter dem Druck der Umwälzpumpe 5 direkt von der Verteiler-Zuleitung 6 zur Sammel-Ableitung 8 und über den Ablauf 9 in den Swimmingpool zurück, so dass eine fortlaufende Reinigung des Wassers unter Umgehung der Absorber-Matte 1 ermöglicht wird.

Der Bausatz für die Herstellung des Solarkollektors im Selbstbau umfasst neben den auch ansonsten vorgesehenen Bauteilen, wie einem Rohrstrang zum Ablängen der benötigten Rippenrohre 2, den mit den Rippenrohren 2 zu verbindenden Sammelleitungen 6, 7 und 8 und den erforderlichen Verbindungsteilen, auch das Absperrelement in Form des Schiebers 11 und die für dessen Montage benötigten Bauteile, also die Muffen 20 und die damit verbundenen Flansche 21.

Die Ausführungsform des Absperrelements 31 gemäß **Figur 3** ist zusätzlich mit einer stromlosen Temperaturregelung ausgestattet. Hierzu ist erstreckt sich zwischen der Handhabe 23 und der Oberseite des Gehäuses 22 ein handelsüblicher Ausdehnungskörper 32, dessen Längenausdehnung in Richtung der Schließkolben (24)-Längsachse deutlich von der Umgebungstemperatur abhängt. Bei hoher Umgebungstemperatur stellt sich eine größere Länge ein, die zu einem Anheben der Handhabe 23 und des Schließkolbens 24 führt, so dass sich unter Umgehung der Röhrenanordnung 1 ein stärkerer Wassersdurchfluss von der Verteiler-Zuleitung 6 direkt zur Sammel-Ableitung 8 einstellt. Der sich beim Ausdehnungskörper 32 aufgrund einer Temperaturdifferenz von etwa 40 °C einstellende Längenunterschied entspricht etwa dem notwendigen Hub zum Schließen und vollständigen Öffnen der Kurzschlussleitung 12.

Die Temperaturregelung dient zur Begrenzung der Temperatur am Auslass 9 bei hoher Sonneneinstrahlung. Die Vorgabe der Maximaltemperatur erfolgt durch Einstellen der Ausgangslänge des Ausdehnungskörpers 32. Hierzu ist eine Rändelschraube 33 vorgesehen, die an der Handhabe 23 angebracht ist und die über eine Gewindestange 35 mit einer Bodenplatte 34 des Ausdehnungskörpers 32 zusammenwirkt.

Alternativ dazu kann die Temperaturregelung mittels eines auf das Absperrelement 31 einwirkenden Ausdehnungskörpers auch so gestaltet sein, dass sich dieses bei abnehmender Umgebungstemperatur öffnet. Hierbei bei Unterschreitung eines vorgegebenen Mindestwertes des Umgebungstemperatur die Kurzschlussleitung 12 geöffnet, so dass sich mit zunehmendem Temperaturunterschied zwischen der Umgebungstemperatur und der voreingestellten Mindesttemperatur unter Umgehung der Röhrenanordnung 1 ein stärkerer Wassersdurchfluss von der Verteiler-Zuleitung 6 direkt zur Sammel-Ableitung 8 einstellt. Diese Temperaturregelung dient somit zur Umgehung der Röhrenanordnung 1 bei zu niedriger Umgebungstemperatur.

In **Figur 4** ist schematisch ein aus dem Stand der Technik bekannter Schaltkreis zum Betreiben eines Solarkollektors dargestellt.

Zum Erwärmen des Badewassers eines Schwimmbades 44 ist ein Solarkollektor 45 vorgesehen, der eine Umwälzpumpe 46 mit Filtervorrichtung, eine Röhrenanordnung 40 zum Erwärmen des Wassers und ein Leistungssystem umfasst. Das Leistungssystem umfasst eine Bypass-Leitung 41, in der die Röhrenanordnung 40 angeordnet ist, und eine Umgehungsleitung 47.

Im normalen Betriebsmodus strömt das Wasser über die Bypass-Leitung 41 durch die Röhrenanordnung 40 und wird darin erwärmt. Andernfalls strömt das Wasser über die Umgehungsleitung 47 an der Röhrenanordnung 40 vorbei. Die Bypass-Leitung 41 wird aus der Umgehungsleitung 47 mittels zweier Dreiwege-Armaturen 42, 34 abgezweigt, so dass insgesamt sechs wasserdichte Schlauchverbindungen erforderlich sind.

Im Unterschied dazu ist bei dem in **Figur 5** schematisch dargestellten Schaltkreis gemäß der vorliegenden Erfindung zum Erwärmen des Badewassers eines Schwimmbades 52 ein Solarkollektor 51 vorgesehen, bei dem die Röhrenanordnung 1 nicht in eine separaten Bypass-Leitung eingesetzt ist, sondern in die Kurzschlussleitung 12. Diese setzt sich zusammen aus einem vorderen Abschnitt, welcher der Verteiler-Zuleitung 6 zuzuordnen ist und aus einem hinteren Abschnitt, der der Sammel-Ableitung 8 der Röhrenanordnung 1 zuzuordnen ist.

Zur Umgehung der Röhrenanordnung 1 werden Verteiler-Zuleitung 6 und Sammel-Ableitung 8 unter Bildung einer Kurzschlussleitung 12 miteinander fluidisch verbunden. Außerdem ist ein Absperrelement 11 vorgesehen, mittels dem die Kurzschlussleitung 12 ganz oder teilweise geschlossen werden kann, wie dies weiter oben bereits ausführlich beschrieben ist.

## Patentansprüche

1. Solarkollektor zum Erwärmen von Wasser für einen Swimmingpool (52), umfassend eine mattenförmige Röhrenanordnung (1), die von einer Vielzahl parallel zueinander verlaufender Röhren (2) gebildet wird, die entweder einem Zulaufabschnitt (3) oder einem Rücklaufabschnitt (4) für das zu erwärmende Wasser zugeordnet sind, wobei die dem Zulaufabschnitt (3) zugeordneten Röhren (2) mit einer gemeinsamen, an einer Kopfseite der Röhrenanordnung (1) verlaufenden Verteiler-Zuleitung (6) verbunden sind, und die dem Rücklaufabschnitt (4) zugeordneten Röhren (2) an derselben Kopfseite der Röhrenanordnung (1) in einer gemeinsamen Sammel-Ableitung (8) münden, die zu einer Auslauföffnung (9) führt, **dadurch gekennzeichnet, dass** die Verteiler-Zuleitung (6) und die Sammel-Ableitung (8) eine zur Auslauföffnung (9) führende Kurzschlussleitung (12) bilden, welche mittels eines Absperrelements (11) verschließbar ist.

2. Solarkollektor nach Anspruch 1, **dadurch gekennzeichnet, dass** das Absperrelement (11) ein in die Kurzschlussleitung (12) eingesetztes Bauteil ist.

3. Solarkollektor nach Anspruch 2, **dadurch gekennzeichnet, dass** das Absperrelement (11) als Schieber (23; 24) ausgebildet ist.

4. Solarkollektor nach Anspruch 2, **dadurch gekennzeichnet, dass** das Absperrelement (11) als Absperrhahn ausgebildet ist.

5. Solarkollektor nach einem der vorhergehenden Ansprüche, **gekennzeichnet durch** ein handbetätigtes Absperrelement (11).

6. Solarkollektor nach einem der vorhergehenden Ansprüche, **dadurch gekennzeichnet, dass** die Verteiler-Zuleitung (6) und die Sammel-Ableitung (8) mittels einer Verbindungsvorrichtung (20, 21) miteinander verbunden sind, welche gleichzeitig zur Aufnahme des Absperrelements (11) dient.

7. Solarkollektor nach Anspruch 6, **dadurch gekennzeichnet, dass** die Verbindungsvorrichtung (20, 21) einen mit der Verteiler-Zuleitung (6) verbundenen Flansch (21) und einen mit der Sammel-Ableitung (8) verbundenen Flansch (21) umfasst, und dass das Absperrelement (11) zwischen den sich gegenüberliegenden Flanschen (21) angeordnet ist.

8. Solarkollektor nach einem der vorhergehenden Ansprüche, **dadurch gekennzeichnet, dass** die Verteiler-Zuleitung (6), die Sammel-Ableitung (8) und die Verbindungsvorrichtung (20; 21) aus demselben Kunststoff bestehen.

9. Solarkollektor nach einem der vorhergehenden Ansprüche, **dadurch gekennzeichnet, dass** die mattenförmige Röhrenanordnung zwei miteinander verbundene Diagonal-Absorber umfasst, wovon der eine Absorber die Verteiler-Zuleitung und die dem Zulaufabschnitt zugeordneten Röhren, und der andere Absorber die Sammel-Ableitung und die dem Rücklaufabschnitt zugeordneten Röhren umfasst.

10. Solarkollektor nach einem der Ansprüche 1 bis 4, **dadurch gekennzeichnet, dass** das Absperrelement (11) mit einer Temperaturregeleinrichtung (32; 33; 34) verbunden ist.

11. Solarkollektor nach Anspruch 10, **dadurch gekennzeichnet, dass** die Temperaturregeleinrichtung (32; 33; 34) einen auf das Absperrelement (11) stromlos einwirkenden Ausdehnungskörper (32) umfasst.

12. Bausatz für einen Solarkollektor nach einem der vorhergehenden Ansprüche, umfassend einen Rohrstrang (2) aus Kunststoff zur Herstellung einer mattenförmigen Röhrenanordnung (1), eine Verteiler-Zuleitung (6) und eine Sammel-Ableitung (8), **dadurch gekennzeichnet, dass** zur Ausbildung einer Kurzschlussleitung (12) zwischen Verteiler-Zuleitung (6) und Sammel-Ableitung (8) eine Verbindungsvorrichtung (20, 21) vorgesehen ist, und dass zum Verschließen der Kurzschlussleitung (12) ein bewegliches Absperrelement (11) enthalten ist.

13. Bausatz nach Anspruch 12, **dadurch gekennzeichnet, dass** die Verbindungsvorrichtung (20; 21) einen mit der Verteiler-Zuleitung (6) zu verbindenden Flansch (21) und einen mit der Sammel-Ableitung (8) zu verbindenden Flansch (21), umfasst.
